Europäisches Patentamt

European Patent Office

Office européen des brevets

(19)

(11) **EP 0 549 455 B1**

(12) **FASCICULE DE BREVET EUROPEEN**

(45) Date de publication et mention
de la délivrance du brevet:
**21.02.1996 Bulletin 1996/08**

(51) Int. Cl.[6]: **B64C 27/45**, B64C 27/35,
F16F 1/40

(21) Numéro de dépôt: **92403510.8**

(22) Date de dépôt: **21.12.1992**

(54) **Dispositif de palier élastomérique cylindrique à grand débattement angulaire**

Zylindrische Elastomer-Lager-Anlage mit grossem WInkelausschlag

Cylindric elastomeric bearing system with large angular deflection

(84) Etats contractants désignés:
**DE GB IT**

(30) Priorité: **26.12.1991 FR 9116185**

(43) Date de publication de la demande:
**30.06.1993 Bulletin 1993/26**

(73) Titulaire: **AEROSPATIALE Société Nationale
Industrielle
F-75781 Paris Cédex 16 (FR)**

(72) Inventeur: **Aubry, Jacques Antoine
F-13480 Cabries (FR)**

(74) Mandataire: **Phélip, Bruno
F-75009 Paris (FR)**

(56) Documents cités:
EP-A- 0 077 132          EP-A- 0 225 250
FR-A- 1 542 617          FR-A- 2 358 316
GB-A- 2 094 393          US-A- 4 986 735

**Description**

La présente invention se rapporte à un palier élastomérique cylindrique à grand débattement angulaire et relativement rigide radialement, qui se monte entre un manchon intérieur et un manchon extérieur, de manière que le manchon extérieur et le manchon intérieur puissent tourner l'un par rapport à l'autre autour de leur axe commun, sans qu'il y ait pratiquement de possibilité de débattement radial. Ces types de paliers élastomériques cylindriques, selon l'invention, et qui fonctionnent sans aucune lubrification, se montent notamment sur une tête de rotor de giravion entre le corps de moyeu et chacune des pales pour constituer une articulation de changement de pas pour lesdites pales.

On connaît de nombreux types de paliers qui ont une certaine souplesse entre la partie interne et la partie externe, et qui sont plus particulièrement utilisés dans les structures de liaison de chacune des pales d'un giravion avec le corps du moyeu de rotor.

Le brevet français N° 2 358 316 concerne ces types de liaison, et il a pour objet un rotor d'hélicoptère, qui comporte un moyeu de rotor tournant autour d'un axe sensiblement vertical, et qui comprend un ensemble de pales de rotor. Selon ce brevet, le moyeu est muni, pour chaque pale, d'un élément de flexion qui s'étend sensiblement radialement, et qui est flexible élastiquement dans le plan de battement de la pale. Suivant cette invention, le moyeu comporte une articulation de changement de pas qui est située à l'extrémité tournée vers l'extérieur de l'élément de flexion, et qui comporte une portion sensiblement tubulaire. Cette portion sensiblement tubulaire est munie, du côté de l'extrémité tournée vers l'extérieur, de moyens de fixation de la pale de rotor. De plus, cette portion tubulaire est montée pivotante sur un palier intérieur et sur un palier extérieur par rapport à l'axe du rotor. Ces deux paliers sont en élastomère, et ils sont montés distants l'un de l'autre sur une broche qui prolonge l'élément de flexion. Un montage élastique conçu pour travailler au cisaillement est associé au palier extérieur, de manière à permettre les mouvements de traînée de la portion tubulaire et de la pale qui lui est associée. Ces mouvements de traînée se font autour du centre géométrique du palier intérieur. Le palier intérieur comprend deux paliers élémentaires en élastomère qui sont montés sur un support autour du centre géométrique de ce palier intérieur. La surface extérieure de l'un des paliers élémentaires en élastomère est montée fixe en rotation dans la portion tubulaire, tandis que la surface extérieure du second palier élémentaire est fixée à la broche par l'intermédiaire d'un organe de poussée. Cet organe de poussée permet ainsi aux efforts dus à la force centrifuge d'être transmis au moyeu par le palier intérieur. Selon cette invention, le palier extérieur comprend un palier annulaire en élastomère qui a une surface intérieure fixée à la broche, et une surface extérieure qui est fixée à l'intérieur d'un manchon coaxial. Le montage élastique travaillant au cisaillement, qui a été cité plus haut, est ainsi logé entre ce manchon coaxial et la surface intérieure correspondante de la portion tubulaire. L'ensemble élastique travaillant au cisaillement comporte un organe élastique annulaire de cisaillement qui a une surface fixée sur une collerette, constituée par un prolongement du manchon coaxial et qui s'étend perpendiculairement à l'axe de la portion tubulaire, et dont l'autre surface opposée est fixée sur une collerette prévue à l'intérieur de la portion tubulaire. L'organe élastique de cisaillement est fait en matériau synthétique visco-élastique qui a des propriétés d'hystérésis convenables, de manière à fournir automatiquement un effet d'amortissement, lorsqu'il est soumis à des déplacements en cisaillement.

Le brevet français N° 2 358 316 se rapporte ainsi à un palier élastomérique qui permet un débattement radial afin de donner à l'ensemble de l'articulation une certaine souplesse en traînée dans le plan du rotor, par rotation autour du centre du palier intérieur, qui se comporte alors comme une rotule. De plus, pour introduire dans cette pseudo-articulation de traînée un amortissement, il est utilisé dans cette invention des éléments élastiques en matériau visco-élastique à grande hystérésis. On a ainsi dans ce palier une constitution en deux parties : une première partie, donnée par le palier intérieur et par le palier extérieur, permet un débattement angulaire limité autour de l'axe de ces paliers, et une seconde partie, formée par un montage élastique travaillant au cisaillement, qui autorise des mouvements angulaires de la portion tubulaire par rapport à la broche avec un rappel élastique et un amortissement de ces mouvements.

Ce type de rotor décrit dans ce document présente l'inconvénient de mettre en oeuvre des structures de liaison entre le corps de moyeu et chaque pale, qui sont des ensembles complexes mélangeant plusieurs fonctions : le débattement angulaire autour de l'axe de la pale de manière à permettre la commande de changement de pas, et les débattements angulaires de traînée avec leur amortissement.

Le but de la présente invention est de proposer un palier élastomérique cylindrique à grand débattement angulaire, qui se monte entre un manchon intérieur et un manchon extérieur, et qui est agencé de façon que le manchon extérieur et le manchon intérieur puissent tourner l'un par rapport à l'autre autour de leur axe commun, sans qu'il y ait pratiquement de possibilité de débattement radial ; dans une structure faisant appel au minimum de composants.

Le palier élastomérique cylindrique à grand débattement angulaire, selon l'invention, comporte trois éléments torsibles cylindriques coaxiaux : un élément central et deux éléments latéraux disposés de part et d'autre de l'élément central. Chaque élément cylindrique torsible est constitué d'une partie centrale élastomérique déformable, relativement souple angulairement et relativement rigide radialement, qui est solidaire d'une armature interne et d'une armature externe. L'armature externe de l'élément central et l'armature interne de chaque élément latéral sont solidaires, de manière à ne former qu'une seule et même pièce : l'armature commune. L'armature interne de l'élément central est montée sur un manchon intérieur avec lequel elle est solidarisée, et l'armature externe de chaque élément latéral est montée dans un manchon extérieur avec lequel elle est solidarisée. Les manchons intérieur et extérieur sont coaxiaux, de manière que le manchon extérieur et le manchon intérieur puissent tourner l'un par rapport à l'autre autour de leur axe commun; des moyens de rigidification radiale internes au palier étant aptes à empêcher sensiblement tout débattement radial du manchon extérieur par rapport au manchon intérieur.

Afin d'obtenir un grand débattement angulaire pour l'ensemble du palier, chaque élément latéral de préférence une capacité qui est sensiblement la moitié de l'élément central, de telle sorte que le débattement angulaire de l'ensemble des trois éléments soit sensiblement le double de celui de l'élément central seul.

Avantageusement, lesdits moyens de rigidification radiale consistent en un ensemble lamifié constituant la partie centrale de chaque élément élastomérique torsible cylindrique, relativement souple angulairement et relativement rigide radialement. De façon connue, cet ensemble lamifié est formé de tubes coaxiaux minces rigides de section circulaire, entre lesquels sont interposées des couches d'élastomère. L'ensemble de l'armature interne, de l'armature externe, des tubes minces rigides et des couches d'élastomère est assemblé par vulcanisation, de manière à former un corps qui transmet les efforts radiaux avec de faibles déformations, mais qui est déformable élastiquement angulairement, de façon à permettre les mouvements de rotation des armatures interne et externe, l'une par rapport à l'autre. De plus, les dimensions des faces intérieures et extérieures des parties centrales des trois éléments sont sensiblement identiques dans le sens transversal. La partie centrale de l'élément central et la partie centrale de chacun des deux éléments latéraux ont une forme cylindrique, dont l'axe est celui des manchons intérieur et extérieur.

Selon une variante de l'invention, la partie centrale de l'élément central et la partie centrale de chacun des deux éléments latéraux ont une forme tronconique, dont l'axe est celui des manchons intérieur et extérieur.

Préférentiellement, selon un mode de réalisation, le palier cylindrique comporte deux armatures intermédiaires intégrant chacune l'armature interne de l'élément latéral correspondant, ces deux armatures intermédiaires étant solidarisées avec l'armature externe de l'élément central, de manière à constituer l'armature commune. Chacune des armatures intermédiaires est assemblée avec l'armature externe de l'élément central par emmanchement forcé.

Par ailleurs, les moyens de rigidification radiale sont constitués par les faces intérieures et extérieures de l'armature commune, ces faces ayant des dimensions sensiblement égales, respectivement aux dimensions des faces cylindriques externe du manchon intérieur et interne du manchon extérieur, de manière à constituer, en cas de détérioration des éléments élastomériques torsibles, des paliers lisses de secours avec un jeu de fonctionnement suffisant, lors de l'application des différents efforts radiaux et du débattement circulaire des manchons intérieur et extérieur, l'un par rapport à l'autre. Dans une variante de réalisation, le manchon intérieur porte un coussinet disposé de chaque côté de l'armature interne de l'élément central, dont la face extérieure a des dimensions sensiblement égales à la face intérieure correspondante de l'armature commune, de manière à constituer le palier lisse de secours correspondant. De plus, l'armature externe de chacun des deux éléments latéraux est solidarisée avec le manchon extérieur par emmanchement forcé, et l'armature interne de l'élément central est solidarisée avec le manchon intérieur par emmanchement forcé.

Selon un agencement particulier de l'invention, un système de paliers cylindriques comporte deux paliers cylindriques à grand débattement angulaire, dans lequel :

- le manchon intérieur porte, à l'une de ses extrémités, un des deux paliers cylindriques à grand débattement angulaire ;
- le manchon extérieur porte, à l'une de ses extrémités, l'autre palier cylindrique à grand débattement angulaire ;

de manière que les deux paliers cylindriques soient à l'opposé l'un de l'autre, et que la partie centrale de chacun des éléments de l'un des paliers cylindriques est identique à la partie centrale de chacun des éléments correspondants de l'autre palier cylindrique.

La structure du système de paliers cylindriques est élaborée de façon que :

- le manchon intérieur comporte une face cylindrique externe qui aboutit à une face d'appui, et qui porte :

    . l'un des deux coussinets, l'élément central et l'autre coussinet du premier des deux paliers cylindriques ;
    . une entretoise de maintien interne ;
    . l'un des deux coussinets, l'élément central et l'autre coussinet du deuxième palier cylindrique ;
    . des moyens de tenue axiale de l'ensemble des éléments portés par la face cylindrique externe du manchon intérieur, de manière à les faire buter contre la face d'appui ;

- le manchon extérieur comporte une face cylindrique interne qui aboutit à une face d'appui, et qui porte :

    . les deux éléments latéraux du deuxième palier cylindrique ;
    . une entretoise de maintien externe ;
    . les deux éléments latéraux du premier palier cylindrique ;
    . des moyens de tenue axiale de l'ensemble des éléments portés par la face cylindrique interne du manchon extérieur, de manière à les faire buter contre la face d'appui.

Les moyens de tenue axiale de l'ensemble des éléments portés par la face cylindrique externe du manchon intérieur consistent en un filetage aménagé à l'extrémité de cette face cylindrique, du côté opposé à la face d'appui, et en un écrou qui vient se monter sur ce filetage, de manière à faire buter l'ensemble des éléments contre la face d'appui. Les moyens de tenue axiale de l'ensemble des éléments portés par la face cylindrique interne du manchon extérieur consistent en des moyens de fixation de l'armature externe de l'élément latéral du premier palier cylindrique, disposé à l'extrémité de la face cylindrique interne, du côté opposé à la face d'appui, ces moyens de fixation assemblant l'armature externe de l'élément latéral avec l'extrémité correspondante du manchon extérieur. Les moyens de fixation de l'armature externe de l'élément latéral du manchon extérieur consistent en des boulons assemblant une bride aménagée à la périphérie de l'extrémité de l'armature externe, avec une bride aménagée à l'extrémité correspondante du manchon extérieur.

Afin d'améliorer encore les caractéristiques de cette structure, des pions de liaison sont disposés dans des trous correspondants aménagés respectivement :

- dans le manchon extérieur, sur la face d'appui, et dans l'armature externe de l'élément latéral correspondant du deuxième palier cylindrique, afin de solidariser en rotation l'élément latéral avec le manchon extérieur ;
- dans l'armature externe de l'autre élément latéral du deuxième palier cylindrique, et dans l'entretoise de maintien externe sur la face d'extrémité correspondante, afin de solidariser en rotation l'entretoise de maintien externe avec l'élément latéral ;
- dans l'entretoise de maintien externe, sur l'autre face d'extrémité, et dans l'armature externe de l'élément latéral correspondant du premier palier cylindrique, afin de solidariser en rotation l'élément latéral avec l'entretoise de maintien externe.

Selon l'invention, le système de paliers élastomériques cylindriques peut être appliqué à une tête de rotor de giravion, notamment d'hélicoptère, où il est monté pour la fixation de chacune des pales sur le corps de moyeu.

Dans ce type d'application, la tête de rotor comporte un corps de moyeu portant, pour chacune des pales, un bras qui est le manchon intérieur du système de paliers cylindriques correspondant, dont le manchon extérieur est raccordé à la pale. Le dispositif de commande de pas de la pale est relié au manchon extérieur, et une liaison directe est aménagée entre le corps de moyeu et la pale correspondante, cette liaison directe étant souple en torsion et rigide en traction, de manière à transférer directement les efforts dus à la force centrifuge de la pale au corps de moyeu.

La liaison directe entre le corps de moyeu et la pale correspondante est assurée par un faisceau torsible disposé à l'intérieur du manchon intérieur ; ce faisceau torsible a l'une de ses extrémités qui est montée dans un élément intermédiaire interne solidarisé avec le corps de moyeu, et a l'autre extrémité qui est montée dans un élément intermédiaire externe solidarisé avec la pale.

Dans cette liaison directe, l'élément intermédiaire interne comporte un logement s'évasant vers l'axe du rotor, de manière à recevoir la forme conjuguée de l'extrémité correspondante du faisceau torsible. L'élément intermédiaire interne est monté dans une chape double appartenant au corps de moyeu, l'élément intermédiaire et la chape double ayant deux séries de trous alignés les uns pas rapport aux autres, suivant un axe sensiblement parallèle à l'axe du rotor, de manière à recevoir les deux boulons de fixation de l'élément intermédiaire interne sur le corps de moyeu.

L'élément intermédiaire externe comporte un logement s'évasant vers la pale, de manière à recevoir la forme conjuguée de l'extrémité correspondante du faisceau torsible. L'élément intermédiaire externe a une chape double dans laquelle s'engage le pied de pale, la chape double et le pied de pale ayant deux séries de trous alignés les uns par rapport aux autres, suivant un axe sensiblement parallèle à l'axe du rotor, de manière à recevoir les deux broches boulonnées de fixation de la pale sur l'élément intermédiaire externe.

Dans l'application à un rotor de giravion, le manchon intérieur est muni d'une bride aménagée à son extrémité située à l'opposé de l'extrémité filetée. Cette bride vient s'appliquer contre une bride appartenant à l'élément intermédiaire interne, la bride du manchon intérieur étant solidarisée avec la bride correspondante de l'élément intermédiaire interne au moyens de boulons, afin de réaliser le bras correspondant du corps de moyeu.

Dans l'application à un rotor de giravion, le manchon extérieur est muni d'une chape double aménagée à son extrémité située à l'opposé de la bride de fixation de l'élément latéral du premier palier. Cette chape double reçoit l'élément intermédiaire externe, la chape double et l'élément intermédiaire externe ayant deux séries de trous alignés les uns par rapport aux autres, suivant un axe sensiblement parallèle à l'axe du rotor, de manière à recevoir les deux boulons de fixation du manchon extérieur sur l'élément intermédiaire externe.

Le dispositif de commande de pas de la pale est relié à un support aménagé sur le manchon extérieur. Le support est rattaché directement à la bride du manchon extérieur, et il comporte un axe d'articulation sur lequel est montée la biellette de commande de pas.

Le palier élastomérique cylindrique à grand débattement angulaire, selon l'invention, a comme première caractéristique avantageuse de permettre au manchon extérieur et au manchon intérieur de pouvoir tourner l'un par rapport à l'autre autour de leur axe commun, sans qu'il y ait pratiquement de possibilité de débattement radial. De plus, l'architecture propre de l'invention, qui consiste à avoir un élément central et deux éléments latéraux disposés de part et d'autre de cet élément central, offre la possibilité d'avoir un très grand débattement angulaire tout en ayant un encombrement radial relativement réduit. De plus, l'architecture du dispositif de palier élastomérique, selon l'invention, est extrêmement simple du fait de la présence de l'armature commune entre l'élément central et chacun des deux éléments latéraux. De ce fait, ce type de palier élastomérique cylindrique à grand débattement angulaire, selon l'invention, peut se combiner avec un autre palier cylindrique du même type, de façon à constituer un système formant un tout qui est disposé entre un manchon intérieur et un manchon extérieur, et ne requiert aucune lubrification en service. Ce système de paliers élastomériques cylindriques, selon l'invention, est particulièrement intéressant à monter dans une tête de rotor de giravion, et plus précisément dans une tête de rotor d'hélicoptère. Dans ce type d'application, un système de paliers élastomériques cylindriques, selon l'invention, est disposé entre le corps du moyeu et chacune des pales de la tête de rotor. On a alors une tête de rotor semi-rigide dans laquelle chacune des pales est reliée au corps de moyeu par un système de paliers élastomériques cylindriques à grand débattement angulaire, selon l'invention. Dans ce type d'application, chaque système de paliers élastomériques cylindriques reçoit le dispositif de commande de pas de la pale correspondante. Ce type d'architecture, selon l'invention, est particulièrement avantageux car il permet d'isoler la fonction commande de pas des autres fonctions. En effet, le faisceau torsible encaisse les efforts dus à la force centrifuge qui s'exerce sur la pale correspondante, et les moments de flexion, de battement et de traînée de la pale ainsi que les efforts tranchants de la pale sont absorbés, soit par la pale elle-même, soit par le corps du moyeu avec ses bras-supports de pales.

D'autres avantages ressortiront de l'invention qui sera mieux comprise à l'aide de la description donnée ci-dessous, d'exemples particuliers de réalisation décrits à titre non limitatif, en référence aux dessins annexés sur lesquels :

- la Figure 1 est une vue en coupe axiale d'un système de paliers élastomériques cylindriques à grand débattement angulaire selon l'invention ;
- la Figure 2 est une coupe axiale suivant 2 de la Figure 1 ;
- la Figure 3 est une demi-coupe axiale schématique d'un palier élastomérique cylindrique à grand débattement angulaire selon l'invention ;
- la Figure 4 est une vue schématique en coupe transversale d'un palier élastomérique cylindrique selon l'invention ;
- la Figure 5 est une coupe transversale analogue à la Figure 4 d'un palier élastomérique cylindrique simple connu dans l'état de la technique ;
- la Figure 6 est une coupe axiale d'un mode de réalisation d'un palier élastomérique cylindrique selon l'invention ;
- la Figure 7 est une vue en coupe axiale du palier élastomérique cylindrique représenté sur la Figure 6 dans son montage entre un manchon intérieur et un manchon extérieur selon l'invention ;
- la Figure 8 est une coupe axiale analogue à la Figure 7 d'un autre mode de réalisation de l'invention ;
- la Figure 9 est une coupe axiale du système de paliers élastomériques cylindriques selon l'invention qui est montée sur une tête de rotor d'hélicoptère ;
- la Figure 10 est une coupe axiale suivant 10 de la Figure 9.

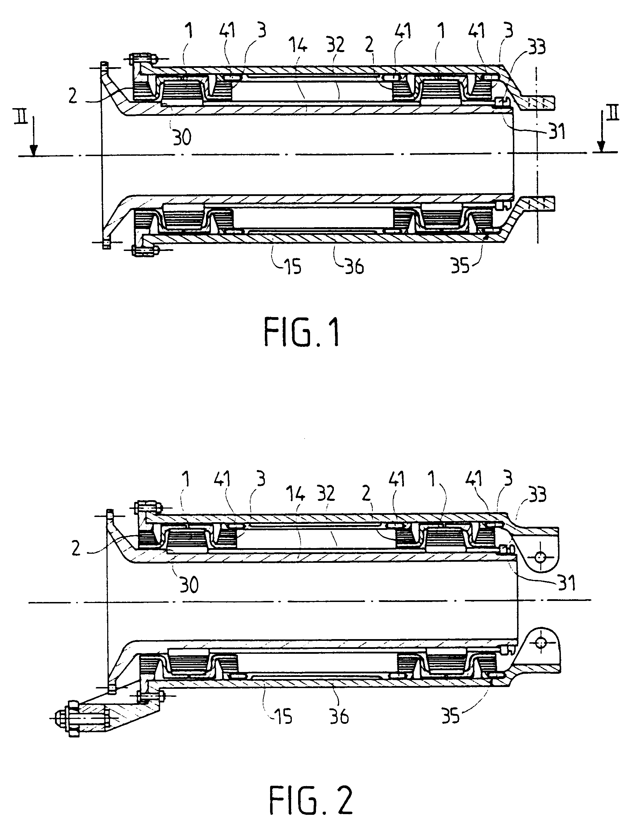

L'invention se rapporte à un système de deux paliers élastomériques cylindriques à grand débattement angulaire, qui sont représentés sur les Figures 1 et 2. Ces deux paliers élastomériques cylindriques sont montés entre un manchon intérieur 14 et un manchon extérieur 15, de façon que :

- le manchon intérieur 14 porte, à l'une de ses extrémités, un des deux paliers élastomériques cylindriques à grand débattement angulaire ;
- le manchon extérieur 15 porte, à l'une de ses extrémités, l'autre palier élastomérique cylindrique à grand débattement angulaire.

Les deux paliers élastomériques cylindriques sont disposés entre le manchon intérieur 14 et le manchon extérieur 15, de manière qu'ils soient opposés l'un à l'autre à chacune des extrémités de l'ensemble.

Chacun des deux paliers élastomériques cylindriques à grand débattement angulaire comporte, selon l'invention, trois éléments cylindriques : un élément central 1 et deux éléments latéraux, référencés respectivement 2 et 3, et qui sont disposés de part et d'autre de l'élément central 1. Le premier palier cylindrique à grand débattement angulaire est monté sur le manchon intérieur 14 en s'appliquant contre une face d'appui 30 de ce manchon intérieur 14, qui est perpendiculaire à l'axe de ce manchon. Une entretoise de maintien interne 32 est disposée sur ce manchon intérieur 14 entre le premier palier élastomérique cylindrique et le deuxième palier élastomérique cylindrique. L'ensemble du premier palier élastomérique cylindrique, de l'entretoise de maintien interne 32 et du deuxième palier élastomérique cylindrique est maintenu en place par un écrou 33, qui vient se monter sur un filetage 31 aménagé à l'extrémité du manchon intérieur 14.

Le deuxième palier élastomérique cylindrique est également monté à l'intérieur du manchon extérieur 15, et il vient s'appliquer contre une face d'appui 35 de ce manchon extérieur 15, cette face d'appui 35 étant perpendiculaire à l'axe du manchon extérieur 15. Une entretoise de maintien externe 36 est disposée entre le deuxième palier élastomérique cylindrique et le premier palier élastomérique cylindrique, qui est également monté à l'intérieur du manchon extérieur 15. L'ensemble du deuxième palier élastomérique cylindrique, de l'entretoise de maintien externe 36 et du premier palier élastomérique cylindrique est maintenu en place axialement à l'intérieur du manchon extérieur 15 par des moyens de tenue axiale, qui seront décrits dans la suite de l'exposé. De plus, des pions de liaison 41 sont disposés dans des trous correspondants aménagés dans le deuxième palier élastomérique cylindrique, dans l'entretoise de maintien externe 36, dans le premier palier élastomérique cylindrique ainsi que dans le manchon extérieur 15.

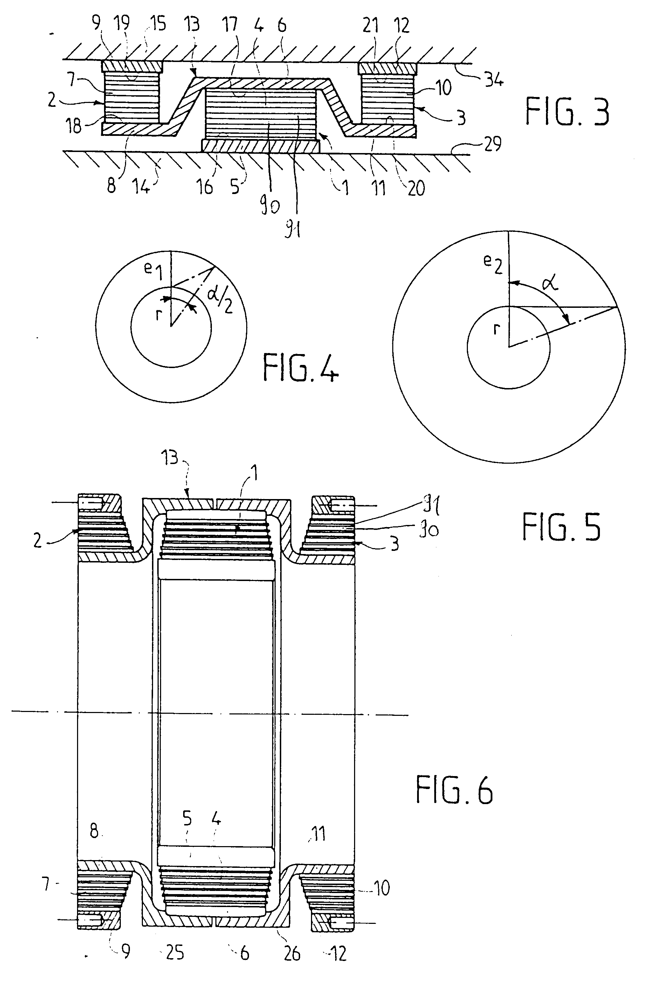

Le palier élastomérique cylindrique à grand débattement angulaire est représenté schématiquement en coupe axiale sur la Figure 3. Ce palier cylindrique comprend trois éléments également cylindriques : un élément central 1 et deux éléments latéraux 2 et 3 qui sont disposés de part et d'autre de l'élément central 1. Chaque élément cylindrique est constitué d'une partie centrale élastomérique et déformable, relativement souple angulairement et relativement rigide radialement, qui est solidaire d'une armature interne et d'une armature externe. L'élément central 1 est ainsi constitué d'une partie centrale 4 disposée entre une armature interne 5 et une armature externe 6. De la même façon, l'élément latéral 2 est constitué d'une partie centrale 7 disposée entre une armature interne 8 et une armature externe 9, ainsi que l'élément latéral 3 qui est constitué d'une partie centrale 10 disposée entre une armature interne 11 et une armature externe 12. Selon une caractéristique essentielle de l'invention, l'armature externe 6 de l'élément central 1 est solidaire d'une part, avec l'armature interne 8 de l'élément latéral 2 et d'autre part, elle est solidaire avec l'armature interne 11 de l'élément latéral 3. L'armature externe 6 et les armatures internes 8 et 11 ne forment ainsi qu'une seule et même pièce qui est l'armature commune 13. L'armature interne 5 de l'élément central 1 est montée sur le manchon intérieur 14 avec lequel elle est solidarisée. De la même manière, l'armature externe 9 de l'élément latéral 2 et l'armature externe 12 de l'élément latéral 3 sont montées l'une et l'autre dans le manchon extérieur 15 avec lequel elles sont solidarisées. Le manchon intérieur 14 et le manchon extérieur 15 sont coaxiaux, et le palier cylindrique à grand débattement angulaire, selon l'invention, permet au manchon intérieur 14 et au manchon extérieur 15 de pouvoir tourner l'un par rapport à l'autre autour de leur axe commun, sans qu'il y ait pratiquement de possibilité de débattement radial.

Le palier cylindrique à grand débattement angulaire, selon l'invention, est ainsi composé d'un palier central, représenté par l'élément central 1, et par un deuxième palier constitué par deux demi-paliers qui sont les éléments latéraux 2 et 3 disposés de part et d'autre de l'élément central 1, afin d'équilibrer les efforts radiaux. Pour ce faire, chaque élément latéral 2 et 3 a une capacité qui est sensiblement la moitié de l'élément central 1. De ce fait, le débattement angulaire de l'ensemble des trois éléments 1, 2 et 3 est sensiblement le double de celui de l'élément central 1 seul. Afin d'obtenir ce résultat, les dimensions des parties centrales de l'élément central 1 et des éléments latéraux 2 et 3 sont sensiblement identiques dans le sens transversal, c'est-à-dire que la face intérieure 16 de la partie centrale 4, la face intérieure 18 de la partie centrale 7 et la face intérieure 20 de la partie centrale 10 ont des diamètres qui sont sensiblement égaux, tandis que la face extérieure 17 de la partie centrale 4, la face extérieure 19 de la partie centrale 7 et la face extérieure 21 de la partie centrale 10 ont aussi des diamètres qui sont sensiblement égaux. L'encombrement axial de la partie centrale 4 et des parties centrales 7 et 10 est établi, de manière que la capacité de chacun des deux éléments latéraux 2 et 3 soit sensiblement la moitié de la capacité de l'élément central 1.

La partie centrale 4 de l'élément central 1, la partie centrale 7 de l'élément latéral 2 et la partie centrale 10 de l'élément latéral 3 sont constitués par un ensemble élastomérique lamifié, de manière à être relativement souple angulairement et relativement rigide radialement. Entre la face extérieure de l'armature interne 5 et la face intérieure de l'armature externe 6, de même qu'entre la face extérieure de l'armature interne 8 et la face intérieure de l'armature externe 9, et entre la face extérieure de l'armature interne 11 et la face intérieure de l'armature externe 12, de l'élément central 1 et des éléments latéraux 2 et 3 correspondants, est interposé un empilement alterné de tubes coaxiaux minces et rigides, par exemple métalliques 90, et de couches d'élastomère 91. Cet empilement alterné comporte des tubes coaxiaux cylindriques 90 en forme de tronc de cône et des couches alternées d'élastomère 91. Chaque ensemble comprenant l'armature interne, l'armature externe, les tubes métalliques 90 et les couches d'élastomère 91, est assemblé par vulcanisation, de manière à former un corps qui transmet les compressions radiales sans déformations importantes, mais qui est déformable élastiquement par cisaillement des couches d'élastomère 91, de l'empilement, de façon à permettre des mouvements relatifs de rotation axiale des armatures interne et externe.

Dans la réalisation représentée sur la Figure 3 du palier élastomérique cylindrique à grand débattement angulaire, selon l'invention, c'est l'ensemble de l'armature commune 13 avec l'armature externe 6 et les armatures internes 8 et 11, l'armature interne 5, les armatures externes 9 et 12 et les tubes coaxiaux rigides, et les couches d'élastomère constituant chacune des parties centrales 4, 7 et 10 qui sont assemblées par vulcanisation, de manière à former un seul ensemble qui transmet les efforts radiaux sans déformations importantes, mais qui est déformable angulairement, de façon à permettre les mouvements de rotation de l'armature interne 5, solidaire du manchon intérieur 4, et des armatures externes 9 et 12, solidaires du manchon extérieur 15 les unes par rapport aux autres.

Le palier élastomérique cylindrique à grand débattement angulaire, qui vient d'être décrit et qui est représenté schématiquement sur la Figure 3, permet d'augmenter la capacité de déformation angulaire de façon très importante dans un encombrement diamétral réduit, ou plus précisément comme dans le cas représenté sur la Figure 3, d'avoir un débattement angulaire de l'ensemble qui soit sensiblement le double d'un palier élastomérique simple, tout en ayant sensiblement le même encombrement transversal.

On a représenté sur les Figures 4 et 5, schématiquement en section transversale d'une part, l'encombrement sur la Figure 4 d'un palier élastomérique cylindrique, selon l'invention, et d'autre part, sur la Figure 5, l'encombrement transversal d'un palier élastomérique simple d'un type connu.

Par rapport au palier simple, la disposition de l'invention permet dans le même encombrement diamétral de doubler la capacité de déformation angulaire, ou, pour une déformation angulaire donnée, de réduire de plus de la moitié l'épaisseur du palier en raison :

- de la diminution dans le rapport 2 de la déformée angulaire sur un palier ;
- de la diminution du taux de cisaillement $\beta$ par la réduction du rapport $\frac{\phi \text{ externe}}{\phi \text{ interne}}$ .

Pour un palier double, selon l'invention, on a :

$$\beta_1 = \frac{(r + e_1)\ \alpha/2}{e_1} \qquad \text{avec } e_2 = 2e_1 \qquad \text{et } \beta_2 > \beta_1$$

Pour un palier simple, on a :

$$\beta_2 = \frac{(r + e_2)\ \alpha}{e_2} \qquad \beta_2 = \frac{(r + 2e_1)\ \alpha}{2e_1}$$

Nous pouvons donc réduire l'épaisseur du palier double, selon l'invention, dans un rapport plus grand que 2 pour se mettre au même taux de cisaillement de l'élastomère déformable.

La Figure 6 représente en coupe axiale un mode de réalisation du palier élastomérique cylindrique lamifié à grand débattement angulaire, dont la conception nécessite un processus de fabrication plus facile, compte tenu de la position des armatures, de l'injection et de la complexité de l'outillage nécessitée par la structure représentée sur la Figure 3. Pour cela, le palier élastomérique cylindrique lamifié comporte deux armatures intermédiaires 25 et 26, l'armature intermédiaire 25 intégrant l'armature interne 8 de l'élément latéral 2, et l'armature intermédiaire 26 intégrant l'armature interne 11 de l'autre élément latéral 3. Les deux armatures intermédiaires 25 et 26 sont solidarisées avec l'armature externe 6 de l'élément central 1, de manière à constituer l'armature commune 13. Pour cela, chacune des armatures intermédiaires 25 et 26 est assemblée avec l'armature externe 6 de l'élément central 1 par emmanchement forcé. Cette disposition, représentée sur la Figure 6, permet ainsi au stade de la fabrication de dissocier les paliers représentés par l'élément central 1 et les éléments latéraux 2 et 3, puis de les assembler au niveau des armatures intermédiaires 25 et 26 avec l'armature externe 6 de l'élément central 1 par emmanchement forcé. Ce type de palier élastomérique cylindrique lamifié peut être monté entre le manchon intérieur 14 et le manchon extérieur 15, de manière que l'armature interne 5 de l'élément central 1 soit solidarisée avec le manchon intérieur 14 par emmanchement forcé, et de manière que l'armature externe 9 de l'élément latéral 2 et l'armature externe 12 de l'élément latéral 3 soient solidarisées l'une et l'autre avec le manchon extérieur 15 par emmanchement forcé.

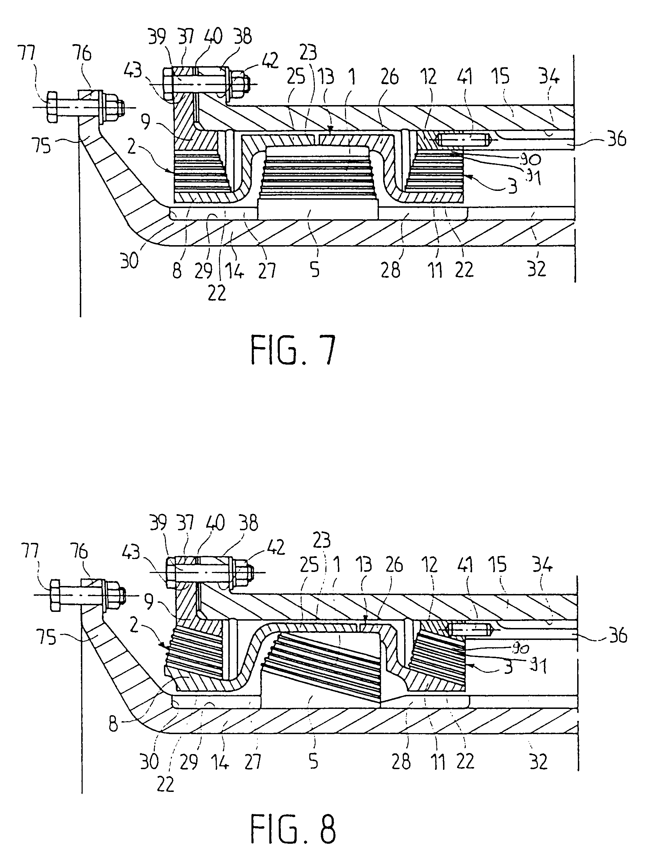

La Figure 7 se rapporte à la coupe axiale du premier palier à grand débattement angulaire, représenté sur les Figures 1 et 2, et qui a comme structure celle détaillée sur la Figure 6.

Dans ce type de montage, le manchon intérieur 14 comporte la face cylindrique externe 29 qui aboutit à la face d'appui 30, perpendiculaire à la face cylindrique externe 29. Cette face cylindrique externe 29 porte un coussinet 27, l'armature interne 5 de l'élément central 1, un autre coussinet 28, et l'entretoise de maintien interne 32. Le manchon extérieur 15 comporte la face cylindrique interne 34 qui aboutit à la face d'appui 35, perpendiculaire à cette face cylindrique interne 34. La face cylindrique interne 34 porte l'entretoise de maintien externe 36, l'armature externe 12 de l'élément latéral 3, et l'armature externe 9 de l'élément latéral 2.

Les moyens de tenue axiale de l'ensemble des éléments portés par la face cylindrique interne 34 du manchon extérieur 15, de manière à les faire buter contre la face d'appui 35, comme cela a été vu au sujet des Figures 1 et 2, consistent en des moyens de fixation qui assemblent l'armature externe 9 de l'élément latéral 2 avec l'extrémité correspondante du manchon extérieur 15. Pour cela, l'armature externe 9 de l'élément latéral 2 comporte une bride 37 qui est aménagée à sa périphérie, et qui vient s'appliquer contre une bride 38 aménagée à la périphérie de l'extrémité du manchon extérieur 15. Un joint 40 est placé entre la bride 38 du manchon extérieur 15 et la bride 37 de l'armature externe 9 de l'élément latéral 2, ces deux brides 37 et 38 étant ensuite bloquées l'une par rapport à l'autre au moyen d'une série de boulons 39 traversant des séries de trous 42 et 43, réalisés respectivement dans la bride 38 du manchon extérieur 15 et dans la bride 37 de l'armature externe 9 de l'élément latéral 2.

Préférentiellement, selon l'invention, les faces intérieures 22 de l'armature commune 13, c'est-à-dire les faces intérieures des armatures internes 8 et 11 ont des dimensions sensiblement égales, respectivement aux dimensions des faces extérieures du coussinet 27 et du coussinet 28, de manière à pouvoir constituer dans chacun des deux cas un palier cylindrique lisse correspondant. De la même façon, la face extérieure 23 de l'armature commune 13 a des dimensions sensiblement égales à la face interne 34 du manchon extérieur 15, de manière aussi à constituer un palier cylindrique lisse. Ces différents paliers lisses ont un jeu de fonctionnement suffisant, qui permet le débattement circulaire des manchons intérieur 14 et extérieur 15, l'un par rapport à l'autre, lors de l'application des différents efforts radiaux.

Cette disposition, selon l'invention, présente ainsi un caractère "fail safe", car elle permet d'utiliser les portées de l'armature commune 13, comme paliers lisses en cas de détérioration du matériau élastomère du lamifié des parties centrales 4, 7 et 10. Dans une variante de réalisation non représentée sur les Figures, où l'armature interne 5 de l'élément central 1 serait montée sur le manchon intérieur 14 sans l'intermédiaire des coussinets 27 et 28, les faces intérieures 22 de l'armature commune 13 ont des dimensions sensiblement égales aux dimensions de la face cylindrique externe 29 du manchon intérieur 14, de manière à constituer également des paliers lisses de sécurité avec un jeu de fonctionnement suffisant.

Dans le mode de réalisation du palier élastomérique cylindrique à grand débattement angulaire, représenté sur la Figure 7, la partie centrale 4 de l'élément central 1, la partie centrale 7 de l'élément latéral 2 et la partie centrale 10 de l'élément latéral 3 ont chacune une forme cylindrique, dont l'axe est celui des manchons intérieur 14 et extérieur 15.

L'extrémité du manchon intérieur 14, située du côté du premier palier élastomérique cylindrique à grand débattement angulaire, s'évase de manière à se terminer à sa périphérie par une bride 75 munie de trous 76. Ces trous 76 sont destinés à recevoir des boulons de fixation 77 du manchon intérieur 14.

En partant de la Figure 7 et en se reportant aux Figures 1 et 2, qui représentent le système de deux paliers élastomériques cylindriques ayant une structure analogue à celle représentée sur la Figure 7, on voit qu'un premier palier cylindrique est disposé à gauche de la Figure et qu'un deuxième palier cylindrique est disposé à droite, et que ces deux paliers élastomériques cylindriques sont montés entre le manchon intérieur 14 et le manchon extérieur 15. Ces deux paliers élastomériques cylindriques sont séparés l'un de l'autre au moyen d'une entretoise de maintien interne 32 et d'une entretoise de maintien externe 36.

Le manchon intérieur 14 comporte la face cylindrique 29 qui aboutit à la face d'appui 30 et il porte :

- un coussinet 27, l'armature interne 5 de l'élément central 1 et l'autre coussinet 28 du premier palier élastomérique cylindrique ;
- l'entretoise de maintien interne 32 ;
- un coussinet 27, l'armature interne 5 de l'élément central 1 et le coussinet 28 du deuxième palier élastomérique cylindrique ;
- les moyens de tenue axiale de l'ensemble des éléments portés par la face cylindrique externe 29 du manchon intérieur 14, de manière à les faire buter contre la face d'appui 30.

Les moyens de tenue axiale sont constitués par le filetage 31 qui est aménagé à l'extrémité de la face cylindrique 29, du côté opposé à la face d'appui 30, et par un écrou 33 qui vient se monter sur ce filetage 31, afin de faire buter l'ensemble des éléments contre la face d'appui 30.

Le manchon extérieur 15 comporte la face cylindrique interne 34 qui aboutit à la face d'appui 35, et qui porte :

- l'armature externe 12 de l'élément latéral 3 et l'armature externe 9 de l'élément latéral 2 du deuxième palier élastomérique cylindrique ;
- l'entretoise de maintien externe 36 ;
- l'armature externe 12 de l'élément latéral 3 et l'armature externe 9 de l'élément latéral 2 du premier palier élastomérique cylindrique ;
- les moyens de tenue axiale de l'ensemble des éléments portés par la face cylindrique interne 34 du manchon extérieur 15, de manière à les faire buter contre la face d'appui 35 par l'intermédiaire de l'armature externe 12 de l'élément latéral 3 du deuxième palier cylindrique.

Les moyens de tenue axiale de l'ensemble des éléments portés par la face cylindrique interne 34 du manchon extérieur 15 sont constitués par les moyens de fixation de l'armature externe 9 de l'élément latéral 2 du premier palier cylindrique. Ces moyens de fixation sont disposés à l'extrémité de la face cylindrique interne 34, du côté opposé à la face d'appui 35, de façon que ces moyens de fixation assemblent l'armature externe 9 de l'élément latéral 2 avec l'extrémité correspondante du manchon extérieur 15.

Ces moyens de fixation sont assurés par les boulons 39 qui assemblent la bride 37 aménagée à la périphérie d'extrémité de l'armature externe 9 de l'élément latéral 2 du premier palier élastomérique cylindrique, avec la bride 38 aménagée à l'extrémité correspondante du manchon extérieur 15.

Les pions de liaison 41 raccordent d'une part la face d'appui 35 du manchon extérieur 15 avec l'armature externe 12 de l'élément latéral 3 du deuxième palier élastomérique cylindrique, d'autre part l'armature externe 9 de l'élément latéral 2 de ce deuxième palier élastomérique cylindrique avec l'entretoise de maintien externe 36, et enfin cette entretoise de maintien externe 36 avec l'armature externe 12 de l'élément latéral 3 du premier palier élastomérique cylindrique. Pour ce faire, des trous correspondants à ces pions de liaison 41 sont aménagés respectivement :

- dans le manchon extérieur 15, sur la face d'appui 35, et dans l'armature externe 12 de l'élément latéral 3 correspondant du deuxième palier élastomérique cylindrique, afin de solidariser en rotation l'armature externe 12 de l'élément latéral 3 avec le manchon extérieur 15 ;
- dans l'armature externe 9 de l'autre élément latéral 2 du deuxième palier élastomérique cylindrique, et dans l'entretoise de maintien externe 36 avec l'armature externe 9 de l'élément latéral 2 ;
- dans l'entretoise de maintien externe 36, sur l'autre face d'extrémité, et dans l'armature externe 12 de l'élément latéral 3 correspondant du premier palier élastomérique cylindrique, afin de solidariser en rotation l'armature externe 12 de l'élément latéral 3 avec l'entretoise de maintien externe 36.

Dans le mode de réalisation représenté sur les Figures 1 et 2, la partie centrale de chacun des éléments de l'un des paliers élastomériques cylindriques est identique à la partie centrale de chacun des éléments correspondants de l'autre palier élastomérique cylindrique.

La Figure 8 est une vue en coupe similaire à la Figure 7, dans laquelle la partie centrale 4 de l'élément central 1, la partie centrale 7 de l'élément latéral 2 et la partie centrale 10 de l'élément latéral 3 ont une forme tronconique dont l'axe est celui des manchons intérieur 14 et extérieur 15. Ce type de palier permet la reprise d'efforts combinés radiaux et axiaux, ou simplement introduit une pré-contrainte au montage, afin d'améliorer la tenue en fatigue de l'élastomère.

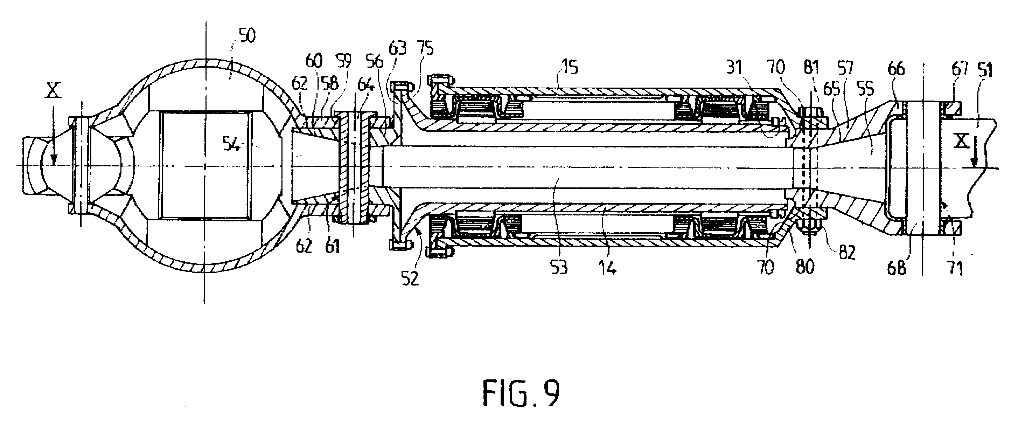

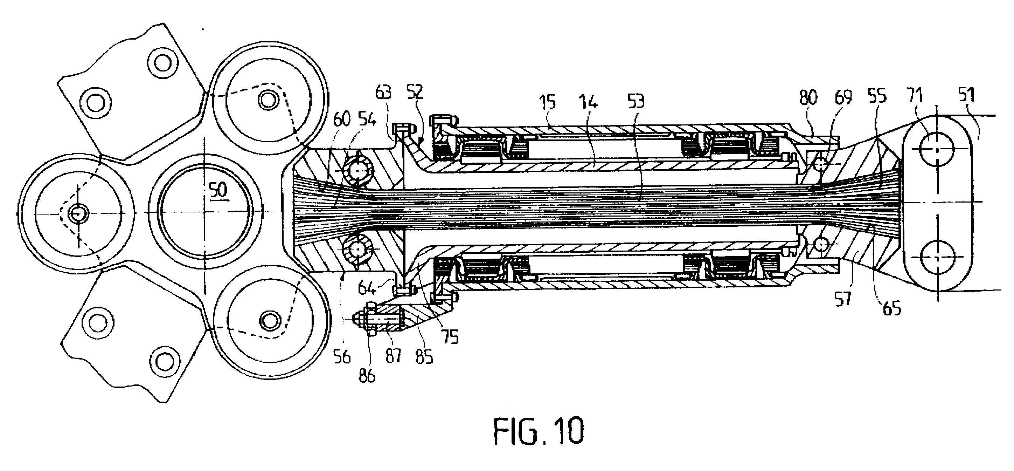

Ce système de paliers élastomériques cylindriques lamifiés, selon l'invention, est particulièrement bien adapté pour être monté sur une tête de rotor de giravion, et notamment sur une tête de rotor d'hélicoptère, comme on peut le voir sur les Figures 9 et 10. La tête de rotor comporte un corps de moyeu 50 qui est relié à chacune des pales 51 par un système de paliers élastomériques cylindriques lamifiés, selon l'invention, représenté sur les Figures 1 et 2. Le corps de moyeu 50 porte, pour chacune des pales 51, un bras 52 qui est en fait le manchon intérieur 14 du système de paliers élastomériques cylindriques lamifiés correspondant. Le manchon extérieur 15 de ce système de paliers élastomériques cylindriques lamifiés est raccordé quant à lui à la pale 51. De plus, le dispositif de commande de pas de cette pale 51 est relié au manchon extérieur 15, et une liaison directe est aménagée entre le corps de moyeu 50 et la pale 51 correspondante. Cette liaison directe est conçue de manière à être souple en torsion pour suivre les commandes de pas, et rigide et peu déformable en traction, de manière à transférer directement les efforts dus à la force centrifuge sur la pale 51 au corps de moyeu 50.

La liaison directe entre le corps de moyeu 50 et la pale 51 correspondante est assurée par un faisceau torsible 53 qui est disposé à l'intérieur du manchon intérieur 14. Ce faisceau torsible 53 a son extrémité interne 54 qui est montée dans un élément intermédiaire interne 56 solidarisé avec le corps de moyeu 5O. Le faisceau torsible 53 a son autre extrémité, c'est-à-dire l'extrémité externe 55 qui est montée dans un élément intermédiaire externe 57 solidarisé avec la pale 51.

L'élément intermédiaire interne 56 comporte un logement 60 qui s'évase vers l'axe du rotor, de manière à recevoir la forme conjuguée de l'extrémité interne 54 correspondante du faisceau torsible 53. L'élément intermédiaire interne 56 est monté dans une chape double 58 aménagée sur le corps de moyeu 50. L'élément intermédiaire interne 56 a deux trous 61, qui sont alignés l'un et l'autre respectivement, avec deux trous 59 appartenant à la chape double 58. Ces trous 59 et 61 sont alignés suivant un axe qui est sensiblement parallèle à l'axe du rotor, afin de pouvoir recevoir les deux boulons 64 de fixation de l'élément intermédiaire interne 56 sur le corps de moyeu 50.

Le manchon intérieur 14 est muni d'une bride 75 qui est aménagée à son extrémité située à l'opposé de l'extrémité filetée 31. Cette bride 75 vient s'appliquer contre la bride 63 qui appartient à l'élément intermédiaire interne 56. La bride 75 du manchon intérieur 14 est solidarisée avec la bride 63 correspondante de l'élément intermédiaire interne 56 au moyen de boulons 77, afin de réaliser le bras 52 du corps de moyeu 50 de la pale correspondante 51.

L'élément intermédiaire externe 57 comporte un logement 65 qui s'évase vers la pale 51, de manière à recevoir la forme conjuguée de l'extrémité externe 55 correspondante du faisceau torsible 53. Cet élément intermédiaire externe 57 possède une chape double 66, dans laquelle s'engage le pied de pale 51. Cette chape double 66 et le pied de pale 51 ont deux séries de trous, chaque série de trous ayant deux trous 67 aménagés dans la chape double 66 et un trou 71 aménagé dans le pied de pale 51. Les deux trous 67 et le trou 71 sont alignés les uns par rapport aux autres, suivant un axe sensiblement parallèle à l'axe du rotor, de manière à recevoir l'un des deux boulons de fixation 68 correspondants de la pale 51 sur l'élément intermédiaire externe 57.

Le manchon extérieur 15 est muni d'une chape double 80 qui est aménagée à son extrémité située à l'opposé de la bride 38 de fixation de l'élément latéral 2 du premier palier cylindrique. Cette chape double 80 reçoit l'élément intermédiaire externe 57. La chape double 80 et l'élément intermédiaire externe 57 ont deux séries de trous 81 et 69 qui sont alignés les uns par rapport aux autres. Chaque série de trous comporte deux trous 81 aménagés dans la chape double 80, et un trou 69 disposé dans l'élément intermédiaire externe 57, les deux trous 81 et le trou 69 de chacune des deux séries de trous sont alignés les uns par rapport aux autres, suivant un axe sensiblement parallèle à l'axe du rotor, de façon à recevoir l'un des deux boulons de fixation 82 du manchon extérieur 15 sur l'élément intermédiaire externe 57.

Selon l'invention, le dispositif de commande de pas de pale est monté sur le manchon extérieur 15, et pour cela il est relié à un support 85 qui est rattaché directement à la bride 38 de ce manchon extérieur 15. Ce support 85 comporte un axe d'articulation 87 sur lequel est montée la biellette de commande de pas 86.

## Revendications

1.  Palier élastomérique cylindrique à grand débattement angulaire, caractérisé en ce qu'il comporte trois éléments torsibles cylindriques coaxiaux : un élément central (1) et deux éléments latéraux (2, 3) disposés de part et d'autre de l'élément central (1), chaque élément cylindrique torsible étant constitué d'une partie centrale élastomérique déformable (90, 91), relativement souple angulairement et relativement rigide radialement, qui est solidaire d'une armature interne et d'une armature externe ; l'armature externe (6) de l'élément central (1) et l'armature interne (8, 11) de chaque élément latéral (2, 3) étant solidaires, de manière à ne former qu'une seule et même pièce : l'armature commune (13) ; l'armature interne (5) de l'élément central (1) étant montée sur un manchon intérieur (14) avec lequel elle est solidarisée, et l'armature externe (9, 12) de chaque élément latéral (2, 3) étant montée dans un manchon extérieur (15) avec lequel elle est solidarisée ; les manchons intérieur (14) et extérieur (15) étant coaxiaux, de manière que le manchon extérieur (15) et le manchon intérieur (14) puissent tourner l'un par rapport à l'autre autour de leur axe commun; des moyens de rigidification radiale (22, 23, 90, 91) internes au palier étant aptes à empêcher sensiblement tout débattement radial du manchon extérieur (15) par rapport au manchon intérieur (14).

2.  Palier élastomérique cylindrique selon la revendication 1, caractérisé en ce que chaque élément latéral (2, 3) a une capacité qui est sensiblement la moitié de l'élément central (1), de telle sorte que le débattement angulaire de l'ensemble des trois éléments soit sensiblement le double de celui de l'élément central seul.

3.  Palier élastomérique cylindrique selon l'une quelconque des revendications 1 et 2, caractérisé en ce que lesdits moyens de rigidification radiale consistent en un ensemble lamifié (90, 91) constituant la partie centrale (4, 7, 10) de chaque élément cylindrique torsible (1, 2, 3), relativement souple angulairement et relativement rigide radialement,

4.  Palier élastomérique cylindrique selon la revendication 3, caractérisé en ce que la structure de l'ensemble lamifié est formée de tubes rigides minces 90 de section circulaire, alternées avec des couches d'élastomère 91 ; l'ensemble de l'armature interne, de l'armature externe, des tubes rigides minces et des couches d'élastomère 91 étant assemblé par vulcanisation, de manière à former un corps qui transmet les efforts radiaux avec peu de déformations, mais qui est déformable élastiquement angulairement, de façon à permettre les mouvements de rotation des armatures interne et externe, l'une par rapport à l'autre.

5.  Palier élastomérique cylindrique selon l'une quelconque des revendications précédentes, caractérisé en ce que les dimensions des faces intérieures (16, 18, 20) et extérieures (17, 19, 21) des parties centrales (4, 7, 10) des trois éléments (1, 2, 3) sont sensiblement identiques dans le sens transversal.

6.  Palier élastomérique cylindrique selon l'une quelconque des revendications précédentes, caractérisé en ce que le palier élastomérique cylindrique comporte deux armatures intermédiaires (25, 26) intégrant chacune l'armature interne (8, 11) de l'élément latéral (2, 3) correspondant, ces deux armatures intermédiaires (25, 26) étant solidarisées avec l'armature externe (6) de l'élément central (1), de manière à constituer l'armature commune (13).

7.  Palier élastomérique cylindrique selon la revendication 6, caractérisé en ce que chacune des armatures intermédiaires (25, 26) est assemblée avec l'armature externe (6) de l'élément central (1) par emmanchement forcé.

8.  Palier élastomérique cylindrique selon l'une quelconque des revendications précédentes, caractérisé en ce que lesdits moyens de rigidification radiale sont constitués par les faces intérieures (22) et extérieures (23) de l'armature commune (13), lesdites faces ayant des dimensions sensiblement égales, respectivement aux dimensions des faces cylindriques externe (29) du manchon intérieur (14) et interne (34) du manchon extérieur (15), de manière à constituer des paliers lisses de sécurité avec un jeu de fonctionnement suffisant, lors de l'application des différents efforts radiaux et du débattement circulaire des manchons intérieur et extérieur, l'un par rapport à l'autre.

9.  Palier élastomérique cylindrique selon l'une quelconque des revendications précédentes, caractérisé en ce que l'armature interne (5) de l'élément central (1) est solidarisée avec le manchon intérieur (14) par emmanchement forcé.

**10.** Palier élastomérique cylindrique selon la revendication 8, caractérisé en ce que le manchon intérieur (14) porte un coussinet (27, 28) disposé de chaque côté de l'armature interne (5) de l'élément central (1), dont la face extérieure a des dimensions sensiblement égales à la face intérieure (22) correspondante de l'armature commune (13), de manière à constituer le palier lisse de secours correspondant.

**11.** Palier élastomérique cylindrique selon l'une quelconque des revendications 1 à 8, caractérisé en ce que l'armature externe (9, 12) de chacun des deux éléments latéraux (2, 3) est solidarisée avec le manchon extérieur (15) par emmanchement forcé.

**12.** Palier élastomérique cylindrique selon l'une quelconque des revendications précédentes, caractérisé en ce que la partie centrale (4) de l'élément central (1) et la partie centrale (7, 10) de chacun des deux éléments latéraux (2, 3) ont une forme cylindrique, dont l'axe est celui des manchons intérieur et extérieur.

**13.** Palier élastomérique cylindrique selon l'une quelconque des revendications 1 à 11, caractérisé en ce que la partie centrale (4) de l'élément central (1) et la partie centrale (7, 10) de chacun des deux éléments latéraux (2, 3) ont une forme tronconique, dont l'axe est celui des manchons intérieur et extérieur.

**14.** Système de paliers élastomériques cylindriques, caractérisé en ce qu'il comporte deux paliers élastomériques cylindriques à grand débattement angulaire, selon l'une quelconque des revendications précédentes.

**15.** Système de paliers élastomériques cylindriques selon la revendication 14, caractérisé en ce que :

- le manchon intérieur (14) porte, à l'une de ses extrémités, un des deux paliers élastomériques cylindriques à grand débattement angulaire ;
- le manchon extérieur (15) porte, à l'une de ses extrémités, l'autre palier élastomérique cylindrique à grand débattement angulaire ;

de manière que les deux paliers élastomériques cylindriques soient à l'opposé l'un de l'autre.

**16.** Système de paliers élastomériques cylindriques selon la revendication 15, caractérisé en ce que la partie centrale de chacun des éléments de l'un des paliers élastomériques cylindriques est identique à la partie centrale de chacun des éléments correspondants de l'autre palier élastomérique cylindrique.

**17.** Système de paliers élastomériques cylindriques selon l'une quelconque des revendications 15 et 16, caractérisé en ce que :

- le manchon intérieur (14) comporte une face cylindrique externe (29) qui aboutit à une face d'appui (30), et qui porte :

  . l'un des deux coussinets (27), l'élément central (1) et l'autre coussinet (28) du premier des deux paliers élastomériques cylindriques ;
  . une entretoise de maintien interne (32) ;
  . l'un des deux coussinets (27), l'élément central (1) et l'autre coussinet (28) du deuxième palier élastomérique cylindrique ;
  . des moyens de tenue axiale de l'ensemble des éléments portés par la face cylindrique externe (29) du manchon intérieur (14), de manière à les faire buter contre la face d'appui (30) ;

- le manchon extérieur (15) comporte une face cylindrique interne (34) qui aboutit à une face d'appui (35), et qui porte :

  . les deux éléments latéraux (2, 3) du deuxième palier élastomérique cylindrique ;
  . une entretoise de maintien externe (36) ;
  . les deux éléments latéraux (2, 3) du premier palier élastomérique cylindrique ;
  . des moyens de tenue axiale de l'ensemble des éléments portés par la face cylindrique interne (34) du manchon extérieur (15), de manière à les faire buter contre la face d'appui (35).

**18.** Système de paliers élastomériques cylindriques selon la revendication 17, caractérisé en ce que les moyens de tenue axiale de l'ensemble des éléments portés par la face cylindrique externe (29) du manchon intérieur (14) consistent en un filetage (31) aménagé à l'extrémité de cette face cylindrique (29), du côté opposé à la face d'appui (30), et en un écrou (33) qui vient se monter sur ce filetage (31), de manière à faire buter l'ensemble des éléments contre la face d'appui (30).

**19.** Système de paliers élastomériques cylindriques selon la revendication 17, caractérisé en ce que les moyens de tenue axiale de l'ensemble des éléments portés par la face cylindrique interne (34) du manchon extérieur (15) consistent en des moyens de fixation de l'armature externe (9) de l'élément latéral (2) du premier palier élastomérique cylindrique, disposé à l'extrémité de la face cylindrique interne (34), du côté opposé à la face d'appui (35), ces moyens de fixation assemblant l'armature externe (9) de l'élément latéral (2) avec l'extrémité correspondante du manchon extérieur (15).

**20.** Système de paliers élastomériques cylindriques selon la revendication 19, caractérisé en ce que les moyens de fixation de l'armature externe (9) de l'élément latéral (2) avec l'extrémité correspondante du manchon extérieur (15) consistent en des boulons (39) assemblant une bride (37) aménagée à la périphérie de l'extrémité de l'armature externe (9), avec une bride (38) aménagée à l'extrémité correspondante du manchon extérieur (15).

**21.** Système de paliers élastomériques cylindriques selon l'une quelconque des revendications 19 et 20, caractérisé en ce que des pions de liaison (41) sont disposés dans des trous correspondants aménagés respectivement :

- dans le manchon extérieur (15), sur la face d'appui (35), et dans l'armature externe (12) de l'élément latéral (3) correspondant du deuxième palier élastomérique cylindrique, afin de solidariser en rotation l'armature externe (12) de l'élément latéral (3) avec le manchon extérieur (15) ;
- dans l'armature externe (9) de l'autre élément latéral (2) du deuxième palier élastomérique cylindrique, et dans l'entretoise de maintien externe (36) sur la face d'extrémité correspondante, afin de solidariser en rotation l'entretoise de maintien externe (36) avec l'armature externe (9) de l'élément latéral ;
- dans l'entretoise de maintien externe (36), sur l'autre face d'extrémité, et dans l'armature externe (12) de l'élément latéral (3) correspondant du premier palier élastomérique cylindrique, afin de solidariser en rotation l'armature externe (12) de l'élément latéral (3) avec l'entretoise de maintien externe (36).

**22.** Tête de rotor de giravion, caractérisée en ce qu'il comporte, pour chacune des pales (51), un système de paliers élastomériques cylindriques, selon l'une des revendications 12 à 19.

**23.** Tête de rotor selon la revendication 22, caractérisée en ce qu'elle comporte un corps de moyeu (50) portant, pour chacune des pales (51), un bras (52) qui est le manchon intérieur (14) du système de paliers élastomériques cylindriques correspondant, dont le manchon extérieur (15) est raccordé à la pale (51) ; le dispositif de commande de pas de la pale (51) étant relié au manchon extérieur (15), et une liaison directe étant aménagée entre le corps de moyeu (50) et la pale (51) correspondante, cette liaison directe étant souple en torsion et rigide en traction, de manière à transférer directement les efforts dus à la force centrifuge de la pale au corps de moyeu.

**24.** Tête de rotor selon la revendication 23, caractérisée en ce que la liaison directe entre le corps de moyeu (50) et la pale (51) correspondante est assurée par un faisceau torsible (53) disposé à l'intérieur du manchon intérieur (14) ; ce faisceau torsible (53) a l'une de ses extrémités (54) qui est montée dans un élément intermédiaire interne (56) solidarisé avec le corps de moyeu (5O), et a l'autre extrémité (55) qui est montée dans un élément intermédiaire externe (57) solidarisé avec la pale (51).

**25.** Tête de rotor selon la revendication 24, caractérisée en ce que l'élément intermédiaire interne (56) comporte un logement (60) s'évasant vers l'axe du rotor, de manière à recevoir la forme conjuguée de l'extrémité (54) correspondante du faisceau torsible (53), cet élément intermédiaire interne (56) étant monté dans une chape double (58) appartenant au corps de moyeu (50), l'élément intermédiaire interne (56) et la chape double (58) ayant deux séries de trous (59, 61) alignés les uns pas rapport aux autres, suivant un axe sensiblement parallèle à l'axe du rotor, de manière à recevoir les deux boulons (64) de fixation de l'élément intermédiaire interne (56) sur le corps de moyeu (50).

**26.** Tête de rotor selon la revendication 24, caractérisée en ce que l'élément intermédiaire externe (57) comporte un logement (65) s'évasant vers la pale (51), de manière à recevoir la forme conjuguée de l'extrémité (55) correspondante du faisceau torsible (53), cet élément intermédiaire externe (57) ayant une chape double (66) dans laquelle s'engage le pied de pale (51), la chape double (66) et le pied de pale (51) ayant deux séries de trous (67, 71) alignés les uns par rapport aux autres, suivant un axe sensiblement parallèle à l'axe du rotor, de manière à recevoir les deux boulons de fixation (68) de la pale (51) sur l'élément intermédiaire externe (57).

**27.** Tête de rotor selon la revendication 25, caractérisée en ce que le manchon intérieur (14) est muni d'une bride (75) aménagée à son extrémité située à l'opposé de l'extrémité filetée, cette bride (75) venant s'appliquer contre une bride (63) appartenant à l'élément intermédiaire interne (56), la bride (75) du manchon intérieur (14) étant solidarisée avec la bride (63) correspondante de l'élément intermédiaire interne (56) au moyen de boulons (77), afin de réaliser le bras (52) correspondant du corps de moyeu (50).

**28.** Tête de rotor selon la revendication 26, caractérisée en ce que le manchon extérieur (15) est muni d'une chape double (80) aménagée à son extrémité située à l'opposé de la bride (38) de fixation de l'élément latéral (2) du premier palier, cette chape double (80) recevant l'élément intermédiaire externe (57), la chape double (80) et l'élément intermédiaire externe (57) ayant deux séries de trous (81, 69) alignés les uns par rapport aux autres, suivant un axe sensiblement parallèle à l'axe du rotor, de manière à recevoir les deux boulons de fixation (82) du manchon extérieur (15) sur l'élément intermédiaire externe (57).

**29.** Tête de rotor selon l'une quelconque des revendications 22 à 28, caractérisée en ce que le dispositif de commande de pas de la pale est relié à un support (85) aménagé sur le manchon extérieur (15), ce support (85) comportant un axe d'articulation (87) sur lequel est montée la biellette de commande de pas (86).

**30.** Tête de rotor selon la revendication 29, caractérisée en ce que le support (85) est rattaché directement à la bride (38) du manchon extérieur (15).

## Claims

**1.** Cylindrical elastomeric bearing with wide angular deflection characterized in that it comprises three coaxial cylindrical torsible elements: one central element (1), and two lateral elements (2,3) arranged either side of the central element (1), each torsible cylindrical element comprising a deformable elastomeric central part (90,91), relatively flexible angularly and relatively rigid radially, which is integral with an inner armature and an outer armature; the outer armature (6) of the central element (1) and the inner armature (8,11) of each lateral element (2,3) being integral so as to form a single part, the common armature (13) the inner armature (5) of the central element (1) being mounted on an inner sleeve (14) to which it is integral, and the outer armature (9,12) of each lateral element (2,3) being mounted in an outer sleeve (15) to which it is integral; inner sleeve (14) and outer sleeve (15) being coaxially arranged in such a way that the outer sleeve (15) and inner sleeve (14) can rotate in relation to each other about their common axis; radially reinforcing means (22, 23, 90,91) inside the bearing being able to prevent substantially any radial deflection of the outer sleeve (15) with respect to the inner sleeve (14).

**2.** Cylindrical elastomeric bearing according to claim 1, characterized in that the capacity of each lateral element (2,3) is substantially half that of the central element (1) in such a way that the angular deflection of the assembly of three elements is substantially double that of the central element alone.

**3.** Cylindrical elastomeric bearing according to any one of claims 1 and 2, characterized in that said radially reinforcing means are a laminated assembly (90,91) forming the central part (4,7,10) of each torsible cylindrical element (1,2,3) that is relatively flexible angularly and relatively rigid radially.

**4.** Cylindrical elastomeric bearing according to claim 3, characterized in that the structure of the laminated assembly is formed of thin, rigid tubes (90) of circular section, alternated with elastomer layers (91), the assembly formed by the inner armature, outer armature, thin rigid tubes and elastomer layers (91) being assembled by curing so as to form a body which transmits radial stresses with little deformation, but which is elastically deformable angularly to allow rotational movements of the inner and outer armatures in relation to each other.

**5.** Cylindrical elastomeric bearing according to any one of the preceding claims, characterized in that the dimensions of the inner faces (16,18,20) and outer faces (17,19,21) of the central parts (4,7,10) of the three elements (1,2,3) are substantially identical in the transverse direction.

**6.** Cylindrical elastomeric bearing according to any one of the preceding claims, characterized in that the cylindrical elastomeric bearing comprises two intermediary armatures (25,26) each integrating the inner armature (8,11) of the corresponding lateral element (2,3), these two intermediary armatures (25,26) being integral with the outer armature (6) of the central element (1) so as to form the common armature (13).

**7.** Cylindrical elastomeric bearing according to claim 6, characterized in that each of the intermediary armatures (25,26) is fixed to the outer armature (6) of the central element (1) by forced fitting.

8. Cylindrical elastomeric bearing according to any one of the preceding claims, characterized in that said radially reinforcing means are formed by the inner faces (22) and outer faces (23) of the common armature (13), said faces having dimensions substantially equal, respectively, to the dimensions of the outer cylindrical face (29) of the inner sleeve (14) and the inner cylindrical face (34) of the outer sleeve (15), in such a way as to form plain back-up bearings with sufficient working play on application of different radial stresses and circular deflection of the inner and outer sleeves in relation to each other.

9. Cylindrical elastomeric bearing according to any one of the preceding claims, characterized in that the inner armature (5) of the central element (1) is integral with the inner sleeve (14) by forced fitting.

10. Cylindrical elastomeric bearing according to claim 8, characterized in that the inner sleeve (14) is fitted with a bearing surface (27,28) arranged each side of the inner armature (5) of the central element (1), the dimensions of the outer face being substantially equal to those of the corresponding inner face (22) of the common armature (13) in such a way as to form the corresponding plain back-up bearing.

11. Cylindrical elastomeric bearing according to any one of claims 1 to 8, characterized in that the outer armature (9,12) of each of the two lateral elements (2,3) is integral with the outer sleeve (15) by forced fitting.

12. Cylindrical elastomeric bearing according to any one of the preceding claims, characterized in that the central part (4) of the central element (1) and the central part (7,10) of each of the two lateral elements (2,3) are cylindrical, the axis being that of the inner and outer sleeves.

13. Cylindrical elastomeric bearing according to any one of claims 1 to 11, characterized in that the central part (4) of the central element (1) and the central part (7,10) of each of the two lateral elements (2,3) are in the shape of a truncated cone, the axis of which is that of the inner and outer sleeves.

14. System of cylindrical elastomeric bearings characterized in that it comprises two cylindrical elastomeric bearings with wide angular deflection, according to any one of the preceding claims.

15. System of cylindrical elastomeric bearings according to claim 14, characterized in that:

- one of the ends of the inner sleeve (14) is fitted with one of the two cylindrical elastomeric bearings with wide angular deflection;
- one of the ends of the outer sleeve (15) is fitted with the other cylindrical elastomeric bearing with wide angular deflection;

in such a way that the two cylindrical elastomeric bearings face each other.

16. System of cylindrical elastomeric bearings according to claim 15, characterized in that the central part of each of the elements of one of the cylindrical elastomeric bearings is identical to the central part of each of the corresponding elements of the other cylindrical elastomeric bearing.

17. System of cylindrical elastomeric bearings according to any one of claims 15 and 16, characterized in that

- the inner sleeve (14) comprises an outer cylindrical face (29) which abuts upon a bearing face (30), and which is fitted with:

  . one of the two bearing surfaces (27), the central element (1) and the other bearing surface (28) of the first of the two cylindrical elastomeric bearings;
  . an inner tie-piece (32);
  . one of the two bearing surfaces (27), the central element (1) and the other bearing surface (28) of the second cylindrical elastomeric bearing;
  . means for axially holding the assembly of elements carried by the outer cylindrical face (29) of the inner sleeve (14), in such a way as to make them bear against the bearing face (30);

- the outer sleeve (15) comprises an inner cylindrical face (34) which abuts upon a bearing face (35), and which is fitted with:

  . the two lateral elements (2,3) of the second cylindrical elastomeric bearing;

. an outer tie-piece (36);
. the two lateral elements (2,3) of the first cylindrical elastomeric bearing;
. means for axially holding the assembly of the elements carried by the inner cylindrical face (34) of the outer sleeve (15), in such a way as to make them bear against the bearing face (35).

18. System of cylindrical elastomeric bearings according to claim 17, characterized in that the means for axially holding the assembly of elements carried by the outer cylindrical face (29) of the inner sleeve (14) comprise a thread (31) made at the end of this cylindrical face (29), on the side facing the bearing face (30), and a nut (33) which engages in this thread (31), in such a way as to make the assembly of elements bear against the bearing face (30).

19. System of cylindrical elastomeric bearings according to claim 17, characterized in that the means for axially holding the assembly of elements carried by the inner cylindrical face (34) of the outer sleeve (15) comprise means for fixing the outer armature (9) of the lateral element (2) of the first cylindrical elastomeric bearing, arranged at the end of the inner cylindrical face (34), on the side facing the bearing face (35), these fixing means securing the outer armature (9) of the lateral element (2) to the corresponding end of the outer sleeve (15).

20. System of cylindrical elastomeric bearings according to claim 19, characterized in that the means for fixing the outer armature (9) of the lateral element (2) to the corresponding end of outer sleeve (15) comprise bolts (39) which secure a flange (37) made on the periphery of the end of the outer armature (9) to a flange (38) made at the corresponding end of the outer sleeve (15).

21. System of cylindrical elastomeric bearings according to any one of claims 19 and 20, characterized in that connecting pieces (41) are arranged in corresponding holes made respectively:

- in the outer sleeve (15), on the bearing face (35), and in the outer armature (12) of the corresponding lateral element (3) of the second cylindrical elastomeric bearing, so as to rigidly lock in rotation the outer armature (12) of the lateral element (3) with the outer sleeve (15);
- in the outer armature (9) of the other lateral element (2) of the second cylindrical elastomeric bearing, and in the outer tie-piece (36) on the corresponding end face, so as to rigidly lock in rotation the outer tie-piece (36) with the outer armature (9) of the lateral element;
- in the outer tie-piece (36), on the other end face, and in the outer armature (12) of the corresponding lateral element (3) of the first cylindrical elastomeric bearing, so as to rigidly lock in rotation the outer armature (12) of lateral element (3) with the outer tie-piece (36).

22. Gyroplane rotor head, characterized in that it comprises for each of the blades (51), a system of cylindrical elastomeric bearings, according to one of claims 12 to 19.

23. Rotor head according to claim 22, characterized in that it comprises a hub body (50) which is fitted, for each blade (51) with an arm (52) which is the inner sleeve (14) of the corresponding cylindrical elastomeric bearing system, and whose outer sleeve (15) is connected to the blade (51); the device for controlling the pitch of the blade (51) being connected to the outer sleeve (15), and a direct connection being provided between the hub body (50) and the corresponding blade (51); this direct connection being flexible in torsion and rigid in traction, so that the stresses due to the centrifugal force of the blade are directly transferred to the hub body.

24. Rotor head according to claim 23, characterized in that the direct connection between the hub body (50) and the corresponding blade (51) is provided by a torsible bundle (53) arranged inside the inner sleeve (14); one of the ends (54) of this torsible bundle (53) is mounted in an inner intermediary element (56) integral with the hub body (50) and the other end (55) is mounted in an outer intermediary element (57) integral with the blade.

25. Rotor head according to claim 24, characterized in that the inner intermediary element (56) comprises a housing (60) wich flares out towards the axis of the rotor, in such a way that it receives the conjugate form of the corresponding end (54) of the torsible bundle (53), this inner intermediary element (56) being mounted in a double yoke (58) belonging to the body of the hub (50), the inner intermediary element (56) and the double yoke (58) having two series of holes (59,61) aligned in relation to each other, along an axis substantially parallel to the rotor axis, in such a way as to receive the two fixing bolts (64) that secure the inner intermediary element (56) to the hub body (50).

26. Rotor head according to claim 24, characterized in that the outer intermediary element (57) comprises a housing (65) which flares out towards the blade (51), in such a way as to receive the conjugate form of the corresponding end (55) of the torsible bundle (53), this outer intermediary element (57) having a double yoke (66) in which the foot of the blade (51) engages, the double yoke (66) and the foot of the blade (51) having two series of holes (67,71) aligned with each other, along an axis substantially parallel to the axis of the rotor, in such a way as to receive the two fixing bolts (68) that secure the blade (51) to the outer intermediary element (57).

27. Rotor head according to claim 25, characterized in that the inner sleeve (14) is provided with a flange (75) made at its end located facing the threaded end, this flange (75) pressing against a flange (63) belonging to the inner intermediary element (56), the flange (75) of the inner sleeve (14) being integral with the corresponding flange (63) of the inner intermediary element (56) by means of bolts (77), so as to form the corresponding arm (52) of the hub body (50).

28. Rotor head according to claim 26, characterized in that the outer sleeve (15) is provided with a double yoke (80) made at the end facing the fixing flange (38) of the lateral element (2) of the first bearing, this double yoke (80) receiving the outer intermediary element (57), the double yoke (80) and the outer intermediary element (57) having two series of holes (81, 69) aligned with each other, along an axis substantially parallel to the axis of the rotor, in such a way as to receive the two fixing bolts (82) which secure the outer sleeve (15) to the outer intermediary element (57).

29. Rotor head according to any one of claims 22 to 28 characterized in that the device for controlling the pitch of the blade is connected to a support (85) made on the outer sleeve (15), this support (85) comprising an articulation axis (87) on which the pitch control rod (86) is mounted.

30. Rotor head according to claim 29, characterized in that the support (85) is directly connected to the flange (38) of the outer sleeve (15).

**Patentansprüche**

1. Zylindrisches Elastomer-Lager mit großem Winkelausschlag, dadurch gekennzeichnet, daß es drei koaxiale zylindrische tordierbare Elemente aufweist: ein mittleres Element (1) und zwei seitliche Elemente (2, 3), die auf beiden Seiten des mittleren Elements (1) angeordnet sind, wobei jedes tordierbare zylindrische Element aus einem verformbaren elastomeren mittleren Teil (90, 91) besteht, der winkelmäßig relativ nachgiebig und radial relativ steif ist und fest mit einem inneren Beschlag und einem äußeren Beschlag verbunden ist; daß der äußere Beschlag (6) des mittleren Elements (1) und der innere Beschlag (8, 11) jedes seitlichen Elements (2, 3) fest verbunden sind, derart, daß sie nur ein einziges und dasselbe Stück bilden: den gemeinsamen Beschlag (13); daß der innere Beschlag (5) des mittleren Elements (1) auf einer inneren Hülse (14) montiert ist, mit welcher er fest verbunden ist, und der äußere Beschlag (9, 12) jedes seitlichen Elements (2, 3) in einer äußeren Hülse (15) montiert ist, mit welcher er fest verbunden ist; daß die innere (14) und die äußere Hülse (15) koaxial sind, derart, daß die äußere Hülse (15) und die innere Hülse (14) in bezug aufeinander um ihre gemeinsame Achse drehbar sind; und daß zum Lager gehörende, innere Mittel zur radialen Versteifung (22, 23, 90, 91) im wesentlichen jeden radialen Ausschlag der äußeren Hülse (15) in bezug auf die innere Hülse (14) verhindern können.

2. Zylindrisches Elastomer-Lager nach Anspruch 1, dadurch gekennzeichnet, daß jedes seitliche Element (2, 3) eine Kapazität besitzt, die im wesentlichen der Hälfte des mittleren Elements (1) entspricht, derart, daß der Winkelausschlag der Gesamtheit der drei Elemente im wesentlichen doppelt so groß ist wie der des mittleren Elements allein.

3. Zylindrisches Elastomer-Lager nach einem der Ansprüche 1 und 2, dadurch gekennzeichnet, daß die Mittel zur radialen Versteifung aus einer lamellaren Konstruktion (90, 91) bestehen, welche den winkelmäßig relativ nachgiebigen und radial relativ steifen mittleren Teil (4, 7, 10) jedes tordierbaren zylindrischen Elements (1, 2, 3) bildet.

4. Zylindrisches Elastomer-Lager nach Anspruch 3, dadurch gekennzeichnet, daß die Struktur der lamellaren Konstruktion von dünnen starren Röhren (90) mit kreisförmigem Querschnitt in wechselnder Anordnung mit Elastomerschichten (91) gebildet ist; daß der Gesamtkomplex aus innerem Beschlag, äußerem Beschlag, den dünnen starren Röhren und den Elastomerschichten (91) durch Vulkanisation zusammengefügt ist, so daß ein Körper gebildet ist, der die Radialkräfte mit wenig Verformung überträgt, der jedoch winkelmäßig elastisch verformbar ist, um die Drehbewegungen der inneren und der äußeren Beschläge in bezug aufeinander zu ermöglichen.

5. Zylindrisches Elastomer-Lager nach einem der vorhergehenden Ansprüche, dadurch gekennzeichnet, daß die Abmessungen der Innenflächen (16, 18, 20) und der Außenflächen (17, 19, 21) der mittleren Teile (4, 7, 10) der drei Elemente (1, 2, 3) in Querrichtung im wesentlichen identisch sind.

6.  Zylindrisches Elastomer-Lager nach einem der vorhergehenden Ansprüche, dadurch gekennzeichnet, daß das zylindrische Elastomer-Lager zwei Zwischenbeschläge (25, 26) aufweist, die jeweils den inneren Beschlag (8, 11) des entsprechenden seitlichen Elements (2, 3) integrieren, wobei diese zwei Zwischenbeschläge (25, 26) fest mit dem äußeren Beschlag (6) des mittleren Elements (1) verbunden sind, so daß sie den gemeinsamen Beschlag (13) bilden.

7.  Zylindrisches Elastomer-Lager nach Anspruch 6, dadurch gekennzeichnet, daß jeder der Zwischenbeschläge (25, 26) mit dem äußeren Beschlag (6) des mittleren Elements (1) durch eine Preßverbindung verbunden ist.

8.  Zylindrisches Elastomer-Lager nach einem der vorhergehenden Ansprüche, dadurch gekennzeichnet, daß die Mittel zur radialen Versteifung von den Innen- (22) und den Außenflächen (23) des gemeinsamen Beschlags (13) gebildet sind, wobei diese Flächen Abmessungen besitzen, die im wesentlichen jeweils den Abmessungen der zylindrischen Außenfläche (29) der inneren Hülse (14) und der zylindrischen Innenfläche (34) der äußeren Hülse (15) entsprechen, um Sicherheits-Gleitlager zu bilden, die ein ausreichendes Wirkspiel bei Anlegung der verschiedenen Radialkräfte und beim Kreisausschlag der inneren und der äußeren Hülse in bezug aufeinander aufweisen.

9.  Zylindrisches Elastomer-Lager nach einem der vorhergehenden Ansprüche, dadurch gekennzeichnet, daß der innere Beschlag (5) des mittleren Elements (1) durch eine Preßverbindung fest mit der inneren Hülse (14) verbunden ist.

10. Zylindrisches Elastomer-Lager nach Anspruch 8, dadurch gekennzeichnet, daß die innere Hülse (14) eine Lagerschale (27, 28) trägt, die auf jeder Seite des inneren Beschlags (5) des mittleren Elements (1) angeordnet ist und deren Außenfläche Abmessungen aufweist, die im wesentlichen mit der entsprechenden Innenfläche (22) des gemeinsamen Beschlags (13) übereinstimmen, um das entsprechende Sicherheits-Gleitlager zu bilden.

11. Zylindrisches Elastomer-Lager nach einem der Ansprüche 1 bis 8, dadurch gekennzeichnet, daß der äußere Beschlag (9, 12) jedes der zwei seitlichen Elemente (2, 3) durch eine Preßverbindung fest mit der äußeren Hülse (15) verbunden ist.

12. Zylindrisches Elastomer-Lager nach einem der vorhergehenden Ansprüche, dadurch gekennzeichnet, daß der mittlere Teil (4) des mittleren Elements (1) und der mittlere Teil (7, 10) jedes der zwei seitlichen Elemente (2, 3) eine zylindrische Form besitzen, deren Achse die der inneren und der äußeren Hülse ist.

13. Zylindrisches Elastomer-Lager nach einem der Ansprüche 1 bis 11, dadurch gekennzeichnet, daß der mittlere Teil (4) des mittleren Elements (1) und der mittlere Teil (7, 10) jedes der zwei seitlichen Elemente (2, 3) eine kegelstumpfartige Form besitzen, deren Achse die der inneren und der äußeren Hülse ist.

14. Zylindrisches Elastomer-Lager-System, dadurch gekennzeichnet, daß es zwei zylindrische Elastomer-Lager mit großem Winkelausschlag nach einem der vorhergehenden Ansprüche aufweist.

15. Zylindrisches Elastomer-Lager-System nach Anspruch 14, dadurch gekennzeichnet, daß:

    -   die innere Hülse (14) an einem ihrer Enden eines der beiden zylindrischen Elastomer-Lager mit großem Winkelausschlag trägt;
    -   die äußere Hülse (15) an einem ihrer Enden das andere zylindrische Elastomer-Lager mit großem Winkelausschlag trägt; so daß sich die beiden zylindrischen Elastomer-Lager einander gegenüberstehen.

16. Zylindrisches Elastomer-Lager-System nach Anspruch 15, dadurch gekennzeichnet, daß der mittlere Teil jedes der Elemente des einen der zylindrischen Elastomer-Lager mit dem mittleren Teil jedes der entsprechenden Elemente des anderen zylindrischen Elastomer-Lagers identisch ist.

17. Zylindrisches Elastomer-Lager-System nach einem der Ansprüche 15 und 16, dadurch gekennzeichnet, daß:

    -   die innere Hülse (14) eine zylindrische Außenfläche (29) aufweist, die an eine Abstützfläche (30) anstößt und die trägt:

        •   eine der beiden Lagerschalen (27), das mittlere Element (1) und die andere Lagerschale (28) des ersten der zwei zylindrischen Elastomer-Lager;
        •   ein inneres Stütz-Zwischenstück (32)

- eine der beiden Lagerschalen (27), das mittlere Element (1) und die andere Lagerschale (28) des zweiten zylindrischen Elastomer-Lagers;
- Mittel zum axialen Zusammenhalt der Gruppe der von der zylindrischen Außenfläche (29) der inneren Hülse (14) getragenen Elemente, so daß diese gegen die Abstützfläche (30) gedrückt werden;

- die äußere Hülse (15) eine zylindrische Innenfläche (34) aufweist, die an eine Abstützfläche (35) anstößt und die trägt:

- die zwei seitlichen Elemente (2, 3) des zweiten zylindrischen Elastomer-Lagers;
- ein äußeres Stütz-Zwischenstück (36);
- die zwei seitlichen Elemente (2, 3) des ersten zylindrischen Elastomer-Lagers;
- Mittel zum axialen Zusammenhalt der Gruppe der von der zylindrischen Innenfläche (34) der äußeren Hülse (15) getragenen Elemente, so daß diese gegen die Abstützfläche (35) gedrückt werden.

18. Zylindrisches Elastomer-Lager-System nach Anspruch 17, dadurch gekennzeichnet, daß die Mittel zum axialen Zusammenhalt der Gruppe der von der zylindrischen Außenfläche (29) der inneren Hülse (14) getragenen Elemente aus einem Gewinde (31), das an dem Ende dieser zylindrischen Fläche (29) auf der der Abstützfläche (30) gegenüberliegenden Seite vorgesehen ist, und aus einer Mutter (33) bestehen, die sich auf dieses Gewinde (31) aufschrauben läßt, um die Gruppe der Elemente gegen die Abstützfläche (30) zu drücken.

19. Zylindrisches Elastomer-Lager-System nach Anspruch 17, dadurch gekennzeichnet, daß die Mittel zum axialen Zusammenhalt der Gruppe der von der zylindrischen Innenfläche (34) der äußeren Hülse (15) getragenen Elemente aus Mitteln zur Befestigung des äußeren Beschlags (9) des seitlichen Elements (2) des ersten zylindrischen Elastomer-Lagers bestehen, das am Ende der zylindrischen Innenfläche (34) auf der der Abstutzfläche (35) gegenüberliegenden Seite angeordnet ist, wobei diese Befestigungsmittel den äußeren Beschlag (9) des seitlichen Elements (2) mit dem entsprechenden Ende der äußeren Hülse (15) verbinden.

20. Zylindrisches Elastomer-Lager-System nach Anspruch 19, dadurch gekennzeichnet, daß die Mittel zur Befestigung des äußeren Beschlags (9) des seitlichen Elements (2) an dem entsprechenden Ende der äußeren Hülse (15) aus Bolzen (39) bestehen, die einen Flansch (37), der an dem Umfang des Endes des äußeren Beschlags (9) vorgesehen ist, mit einem Flansch (38) verbinden, der an dem entsprechenden Ende der äußeren Hülse (15) vorgesehen ist.

21. Zylindrisches Elastomer-Lager-System nach einem der Ansprüche 19 und 20, dadurch gekennzeichnet, daß Verbindungsstifte (41) in entsprechenden Bohrungen angeordnet sind, die jeweils vorgesehen sind:

- in der äußeren Hülse (15) auf der Abstützfläche (35) und in dem äußeren Beschlag (12) des entsprechenden seitlichen Elements (3) des zweiten zylindrischen Elastomer-Lagers, um den äußeren Beschlag (12) des seitlichen Elements (3) mit der äußeren Hülse (15) drehfest zu verbinden;
- in dem äußeren Beschlag (9) des anderen seitlichen Elements (2) des zweiten zylindrischen Elastomer-Lagers und in dem äußeren Stütz-Zwischenstück (36) auf der entsprechenden Endfläche, um das äußere Stütz-Zwischenstück (36) mit dem äußeren Beschlag (9) des seitlichen Elements drehfest zu verbinden;
- in dem äußeren Stütz-Zwischenstück (36) auf der anderen Endfläche und in dem äußeren Beschlag (12) des entsprechenden seitlichen Elements (3) des ersten zylindrischen Elastomer-Lagers, um den äußeren Beschlag (12) des seitlichen Elements (3) mit dem äußeren Stütz-Zwischenstück (36) drehfest zu verbinden.

22. Rotorkopf eines Drehflügelflugzeugs, dadurch gekennzeichnet, daß er für jedes Rotorblatt (51) ein zylindrisches Elastomer-Lager-System nach einem der Ansprüche 12 bis 19 aufweist.

23. Rotorkopf nach Anspruch 22, dadurch gekennzeichnet, daß er einen Nabenkörper (50) aufweist, der für jedes Rotorblatt (51) einen Arm (52) trägt, welcher die innere Hülse (14) des entsprechenden zylindrischen Elastomer-Lager-Systems darstellt, dessen äußere Hülse (15) mit dem Rotorblatt (51) verbunden ist; wobei die Vorrichtung zur Steuerung der Steigung des Rotorblatts (51) an der äußeren Hülse (15) befestigt ist und eine direkte Verbindung zwischen dem Nabenkörper (50) und dem entsprechenden Rotorblatt (51) vorgesehen ist, wobei diese direkte Verbindung torsionselastisch und zugsteif ist, um die auf die Zentrifugalkraft des Rotorblatts zurückzuführenden Kräfte direkt auf den Nabenkörper zu übertragen.

24. Rotorkopf nach Anspruch 23, dadurch gekennzeichnet, daß die direkte Verbindung zwischen dem Nabenkörper (50) und dem entsprechenden Rotorblatt (51) von einem tordierbaren Strang (53) gewährleistet wird, der im Innern der inneren Hülse (14) angeordnet ist; wobei dieser tordierbare Strang (53) mit einem seiner Enden (54), das in einem inneren Zwischenelement (56) montiert ist, mit dem Nabenkörper (50) verbunden ist, und mit dem anderen Ende (55), das in einem äußeren Zwischenelement (57) montiert ist, mit dem Rotorblatt (51) verbunden ist.

25. Rotorkopf nach Anspruch 24, dadurch gekennzeichnet, daß das innere Zwischenelement (56) eine Aussparung (60) aufweist, die sich zur Rotorachse hin erweitert, um die zugehörige Form des entsprechenden Endes (54) des tordierbaren Strangs (53) aufzunehmen, wobei dieses innere Zwischenelement (56) in einer Doppelgabel (58) montiert ist, die zum Nabenkörper (50) gehört, wobei das innere Zwischenelement (56) und die Doppelgabel (58) zwei Reihen von Bohrungen (59, 61) aufweisen, die in bezug aufeinander in einer Linie ausgerichtet sind, entlang einer Achse, welche im wesentlichen parallel zur Rotorachse ist, um die zwei Bolzen (64) zur Befestigung des inneren Zwischenelements (56) an dem Nabenkörper (50) aufzunehmen.

26. Rotorkopf nach Anspruch 24, dadurch gekennzeichnet, daß das äußere Zwischenelement (57) eine Aussparung (65) aufweist, die sich zum Rotorblatt (51) hin erweitert, um die zugehörige Form des entsprechenden Endes (55) des tordierbaren Strangs (53) aufzunehmen, wobei dieses äußere Zwischenelement (57) eine Doppelgabei (66) aufweist, in die der Fuß des Rotorblatts (51) eingreift, wobei die Doppelgabel (66) und der Fuß des Rotorblatts (51) zwei Reihen von Bohrungen (67, 71) aufweisen, die in bezug aufeinander in einer Linie ausgerichtet sind, entlang einer Achse, welche im wesentlichen parallel zur Rotorachse ist, um die zwei Bolzen (68) zur Befestigung des Rotorblatts (51) an dem äußeren Zwischenelement (57) aufzunehmen.

27. Rotorkopf nach Anspruch 25, dadurch gekennzeichnet, daß die innere Hülse (14) mit einem Flansch (75) versehen ist, der an ihrem dem Ende mit Außengewinde gegenüberliegenden Ende vorgesehen ist, wobei dieser Flansch (75) an einem Flansch (63) zur Anlage kommt, der zum inneren Zwischenelement (56) gehört, wobei der Flansch (75) der inneren Hülse (14) mit dem entsprechenden Flansch (63) des inneren Zwischenelements (56) mittels Bolzen (77) fest verbunden ist, um den entsprechenden Arm (52) des Nabenkörpers zu bilden.

28. Rotorkopf nach Anspruch 26, dadurch gekennzeichnet, daß die äußere Hülse (15) mit einer Doppelgabel (80) versehen ist, die an ihrem Ende vorgesehen ist, das dem Flansch (38) zur Befestigung des seitlichen Elements (2) des ersten Lagers gegenüberliegt, daß diese Doppelgabel (80) das äußere Zwischenelement (57) aufnimmt, und daß die Doppelgabel (80) und das äußere Zwischenelement (57) zwei Reihen von Bohrungen (81, 69) aufweisen, die in bezug aufeinander in einer Linie ausgerichtet sind, entlang einer Achse, welche im wesentlichen parallel zur Rotorachse verläuft, um die zwei Bolzen (82) zur Befestigung der äußeren Hülse (15) an dem äußeren Zwischenelement (57) aufzunehmen.

29. Rotorkopf nach einem der Ansprüche 22 bis 28, dadurch gekennzeichnet, daß die Vorrichtung zur Steuerung der Steigung des Rotorblatts mit einer Halterung (85) verbunden ist, die auf der äußeren Hülse (15) vorgesehen ist, wobei diese Halterung (85) eine Drehachse (87) aufweist, auf welcher die Steuerstange (86) zur Blattverstellung montiert ist.

30. Rotorkopf nach Anspruch 29, dadurch gekennzeichnet, daß die Halterung (85) direkt an dem Flansch (38) der äußeren Hülse (15) angebracht ist.

FIG.1

FIG. 2

FIG. 3

FIG.4

FIG. 5

FIG.6

FIG. 7

FIG. 8

FIG.9

FIG.10